# EUROPÄISCHE PATENTANMELDUNG

(11) **EP 1 112 806 A2**
(43) Veröffentlichungstag der Anmeldung: **04.07.2001**
(21) Anmeldenummer: 00126943.0
(22) Anmeldetag: 08.12.2000
(51) Int. Cl.: B23Q 1/48, B23Q 1/50, B23Q 1/54

(54) **Werkzeugmaschine mit einer in mindestens einer Arbeitsebene bewegbaren und positionierbaren Werkzeugspindel**

(30) Priorität: 27.12.1999 DE 19963342
(71) Anmelder: GROB-Werke Dr. h.c. mult. Dipl.-Ing. Burkhart Grob e.K., 87719 Mindelheim (DE)
(72) Erfinder: Högl, Josef, 87719 Mindelheim (DE); Windel, Fritz, 86899 Landsberg a. Lech (DE)
(74) Vertreter: Pfister, Helmut, Dipl.-Ing.

(57) **Zusammenfassung**

Die Erfindung betrifft eine Werkzeugmaschine, bestehend mindestens aus einer Werkzeugspindel, die durch ein Bewegungssystem zumindest in einer Arbeitsebene bewegbar und positionierbar ist. Es wird vorgeschlagen, das Bewegungssystem mindestens aus zwei miteinander durch ein Lenkergelenk gelenkig verbundene Lenker zu realisieren, und daß dabei die Enden der Lenker relativ gegensinnig zueinander und/oder miteinander bewegbar sind.

## Beschreibung

Die Erfindung betrifft eine Werkzeugmaschine, bestehend aus mindestens einer Werkzeugspindel, die durch ein Bewegungssystem zumindest in einer Arbeitsebene bewegbar und positionierbar ist.

Vorgenannte Werkzeugmaschinen sind im Bereich der Technik hinlänglich bekannt. Sie werden in Transferstraßen, Montagezentren, Bearbeitungszentren und dergleichen vielfach eingesetzt. Sie zeichnen sich durch hohe Flexibilität und Beweglichkeit aus und sind in der Lage gleichzeitig nicht nur eine sondern mehrere Werkzeugspindeln zu tragen, wobei die Werkzeugspindeln zum Beispiel auch unterschiedliche Werkzeuge antreiben. Es ist auch bekannt, intelligente Werkzeugwechselsysteme beziehungsweise Werkzeugmagazine mit den Werkzeugmaschinen zu verknüpfen um die Effizienz solcher Werkzeugmaschinen zu erhöhen.

Die Werkzeugspindel ist im Bezug auf das Werkstück zumindest mindestens in einer Ebene, der Arbeitsebene, durch ein Bewegungssystem zu positionieren. Es ist auch durchaus möglich, daß die Werkzeugmaschine bezüglich weiterer Achsen positionierbar ist. Es bestehen zum Beispiel sogenannte Kreuztischanordnungen, bei welchen ein erster Träger einen zweiten, auf dem ersten Träger beweglichen Träger aufweist und so ein zumindest in einer Ebene bewegliches Bewegungssystem für die Werkzeugspindel erreicht. Diese Anordnungen sind auch als "kartesische Maschinen" bekannt, das heißt die relevanten Bewegungsachsen sind rechtwinklig zueinander angeordnet.

Nachteil bei dieser Ausgestaltung ist, daß der erste Träger sehr stark zu dimensionieren ist, da dieser nicht nur das Gewicht der Werkzeugspindel und die auszuübende Arbeitskraft zu tragen und zu lagern hat, sondern noch zusätzlich auch das Gewicht des zweiten Trägers gelagert werden muß. Dies führt dazu, daß aufgrund dieses Prinzipes verhältnismäßig große und schwere Werkzeugmaschinen resultieren.

Aufgrund dieses bekannten Prinzipes müssen große Antriebseinheiten vorgesehen werden, um die hohen Massen in erträglicher Zeit zu beschleunigen, um die Bearbeitungszeiten nicht zu sehr anwachsen zu lassen. Somit führt nicht nur der voluminöse Aufbau einer solchen Werkzeugmaschine, sondern auch die notwendigen aufwendigeren Antriebe zu erhöhten Kosten solcher Werkzeugmaschinen.

Die Erfindung hat es sich daher zur Aufgabe gemacht, eine Werkzeugmaschine, wie eingangs beschrieben, vorzusehen, die leicht und preiswert in der Herstellung ist und gleichzeitig eine hohe Bearbeitungsgeschwindigkeit zuläßt.

Gelöst wird diese Aufgabe durch eine Werkzeugmaschine, wie eingangs beschrieben, bei welcher vorgesehen ist, daß das Bewegungssystem mindestens zwei miteinander durch ein Lenkergelenk gelenkig verbundene Lenker umfaßt und die Enden der Lenker relativ gegensinnig zueinander und/oder miteinander bewegbar sind.

Durch dieses Konzept für das Bewegungssystem wird die aufeinander aufbauende Lagerung von Teilen des Bewegungssystemes vermieden. Die beiden Lenker, die durch ein Lenkergelenk miteinander verbunden sind, bewirken eine Bewegung in der Arbeitseben der Werkzeugspindel. Je nachdem, ob die Lenker aufeinander zufahren oder sich voneinander trennen, bewegt sich die Arbeitsspindel in einer ersten Dimension. Bewegen sich die beiden Lenker gleichsinnig, so ergibt sich eine zweite Dimension, die rechtwinklig zur ersten Dimension angeordnet ist und so eine im wesentlichen frei bestimmbare, von der Werkzeugspindel überstreichbare Arbeitsfläche definiert. Für die erste Dimension reicht auch eine Relativbewegung der beiden Lenker zueinander aus, das heißt ein Lenker kann zum Beispiel auch stillstehen. Ähnliches kann durch die entsprechende Wahl der Lenkerlängen und der Anordnung des Lenkergelenkes an den Lenkern erreicht werden.

Durch den erfindungsgemäßen Vorschlag wird die turmähnliche Kreuztischanordnung der Werkzeugmaschinen aufgegeben, um mit deutlich geringeren Massen, da diese einander nicht mehr gegenseitig zu stützen haben, eine deutlich leichtere Werkzeugmaschine realisiert. Dabei ist nicht nur eine geringere Anzahl von Bauteilen möglich, im wesentlichen werden hierfür nur zwei gelenkig verbundene, zueinander bewegliche Lenker benötigt, durch die geringeren Massen sind auch kleiner dimensionierte, und damit auch günstigere Antriebe notwendig, um, gemäß dem Newtonschen Gesetz die gleichen Beschleunigungen zu erreichen. Das Positionieren der Werkzeugspindel erfolgt somit mit kleineren Antrieben in der gleichen Zeit, wodurch der Aufwand für den Antrieb des Bewegungssystemes bei gleicher Geschwindigkeit der Maschine geringer ist als bei den bekannten Kreuztischanordnungen.

Die Erfindung schließt nicht aus, daß auch mehr als nur zwei Lenker erfindungsgemäß vorgesehen sind, gleiches gilt auch für die Anzahl der Lenkergelenke. Es ist zum Beispiel möglich, das vorgenannte Prinzip zum Beispiel im Rahmen von Scherenkinematiken und dergleichen einzusetzen.

In einer bevorzugten Ausgestaltung der Erfindung ist vorgesehen, daß sich die Lenker auf der gleichen Ebene abstützen. Alternativ hierzu ist es natürlich auch möglich, die Lenker auf unterschiedlichen Niveaus zu lagern, um spezielle geometrische Relationen zu erreichen. Dabei ist ebenfalls erfindungsgemäß hiervon umfaßt, daß die Anordnung nicht nur auf einer Ebene gelagert ist, es ist in gleicher Weise auch möglich, daß die Lenker an einer Ebene hängend angeordnet sind, oder an einer im wensentlichen senkrecht verlaufenden Ebene abgestützt werden. Hierfür sind entsprechende Führungen für die Lenker vorgesehen.

Des weiteren ist es günstig, wenn der Lenker durch ein Fußgelenk auf einem Lenkerfuß gelenkig gelagert ist. Der Lenkerfuß bildet dabei zum Beispiel den Schlitten auf einer Schienenbahn zur Bewegung des Lenkers. Um eine entsprechende Stabilität der Werkzeugmaschine zu erreichen ist natürlich vorgesehen, daß eine Lagerung des Lenkerfußes auf mehreren, parallel verlaufenden Schienenbahnen möglich ist. Alternativ zu einem Lenkerfuß, und mit diesem auch gleichwirkend, ist es, wenn sich der Lenker im unteren Bereich auf einem drehbaren Körper, zum Beispiel einer Rolle oder dergleichen abstützt, wobei dann die Drehachse dieser Rolle auch gleichzeitig die Drehachse des "Fußgelenkes" ist.

Als Antrieb für den Lenker beziehungsweise den Lenkerfuß ist zum Beispiel eine Kugelrollspindel, ein Linearantrieb, ein Ketten- beziehungsweise Bandantrieb, oder eine Ritzel-Zahnstangenanordnung vorgesehen. Der Antrieb bewirkt die Bewegung der Lenker in gleichsinniger oder in gegensinniger Weise, um entweder die Werkzeugspindel in Richtung der Schienenbahn (bei Bewegung miteinander) oder rechtwinklig hierzu (bei gegensinniger Bewegung) zu bewegen. Dabei ist es gleichwertig, ob die vorbeschriebenen Antriebe am Lenkerfuß direkt angreifen oder an Teilen des Lenkers, dann gegebenenfalls beweglich gelagert, angreifen.

Der Ausgestaltung der Antriebe kommt dabei doch eine große Bedeutung zu, da über deren genaue Positionierung letztendlich die Positionierung der Werkzeugspindel relativ auf das zu bearbeitende Werkstück erfolgt. Es wird dabei auf bekannte Steuerungsmittel zurückgegriffen, wobei für die Positionierung der Werkzeugspindel die jeweiligen geometrischen Verhältnisse zu beachten sind.

In üblicher Weise wird dabei die Antriebssteuerung von der Maschinensteuerung entsprechend mit Daten versorgt, um eine entsprechende Positionierung durchzuführen. Das Ganze passiert hierbei in bevorzugter Weise mit microporzessorunterstützten Steuerungen und ist zum Beispiel in komplexeren Transferstraßen oder Bearbeitungszentren entsprechend umfassend integriert ausgeführt.

In einer bevorzugten Ausgestaltung der Erfindung ist vorgesehen, daß die Rotationsachse der Werkzeugspindel parallel, rechtwinklig oder unter einem beliebigen Winkel zur Drehachse des Lenkergelenkes orientierbar beziehungsweise einstellbar ist. In einem ersten Ausführungsbeispiel ist die Werkzeugmaschine als Dreiachsmaschine ausgebildet. Die Werkzeugspindel ist rechtwinklig zu der durch die Lenker vorgegebene Arbeitsebene bewegbar, wodurch die Rotationsachse der Werkzeuspindel parallel zur Gelenkachse des Lenkergelenkes ist. Es ist aber auch möglich, eine hierzu rechtwinklige Anordnung zu wählen, um zum Beispiel durch die Bewegung der Lenker eine Vorwärtsbewegung der Werkzeugspindel in Achsrichtung zu erreichen. Eine höhere Flexibilität wird dadurch erreicht, wenn die Spindel bezüglich des Bewegungssystemes beweglich, zum Beispiel um eine vierte Achse drehbar gelagert, angeordnet wird. Dadurch ist es möglich, auch verhältnismäßig komplexe Arbeiten aufgrund einer dann realisierten Vierachsmaschine durchzuführen.

Es wird auch vorgeschlagen, daß das gesamte Bewegungssystem auf einem eigens bewegbaren Schlitten angeordnet ist. Die Lenker sind auf dem Schlitten, zum Beispiel durch die bereits beschriebenen Lenkerfüße, bewegbar gelagert. Durch eine solche Ausgestaltung kann die Arbeitsfläche parallel zur Bewegungsrichtung des Schlittens deutlich ausgeweitet werden und dadurch ein größerer Arbeitsraum für die Arbeitsspindel zur Verfügung gestellt werden. Gleichzeitig ist es möglich, durch eine Überlagerung der Bewegung des Schlittens und der Bewegung der Lenker auf dem Schlitten eine noch schnellere Positionierung durchzuführen.

In einer bevorzugten Ausgestaltung ist auch vorgesehen, daß die Lenker die gleiche Länge aufweisen. Die Länge eines Lenkers bestimmt sich hierbei aus dem Abstand der relevanten Achsen. Es ist dabei der Abstand der Gelenkachse (des Lenkergelenkes) zur Fußachse (des Fußgelenkes) zu betrachten. Bei einer solchen Geometrie liegt das Lenkergelenk immer zwischen den beiden Lenkerfüßen beziehungsweise den jeweiligen Fußgelenken. Günstigerweise wird dann auch die Arbeitsspindel in der Nähe des Lenkergelenkes angeordnet, um diese geometrischen Eigenschaften für die Positionierung der Werkzeugspindel auszunützen.

Alternativ ist es aber auch möglich, daß im Sinne der Erfindung die Lenker unterschiedliche Längen aufweisen und der längere, erste Lenker die Werkzeugspindel trägt. Es ist dadurch möglich, bei entsprechender Ansteuerung und entsprechender Dimensionierung der relevanten Lenkerlängen, verhältnismäßig komplizierte Bearbeitungskurven mit der Arbeitsspindel zu fahren.

Erfindungsgemäß wird dabei auch vorgeschlagen, daß sich das Lenkergelenk auf dem ersten Lenker zwischen der Antriebsspindel und dem Lenkerfuß befindet. Alternativ hierzu ist es durchaus auch möglich, daß sich die Antriebsspindel zwischen Lenkergelenk und Lenkerfuß befindet.

In einer bevorzugten erfindungsgemäßen Ausgestaltung ist vorgesehen, daß sich das Lenkergelenk in der Mitte des ersten Lenkers befindet. Das bedeutet, daß der Abstand der Gelenkachse zur Fußachse des Fußgelenkes des ersten Lenkers genauso groß ist, wie der Abstand der Gelenkachse von der Rotationsachse der Antriebsspindel. Dies setzt natürlich voraus, daß die Antriebsspindel parallel zur Gelenkachse orientiert beziehungsweise orientierbar ist.

Insbesondere wenn die Länge des zweiten, kurzen Lenkers der Länge des Lenkerstückes des ersten Lenkers vom Lenkergelenk zur Werkzeugspindel entspricht, werden verhältnismäßig einfache und auch für den Betrieb günstige Relationen geschaffen. Es ergibt sich nämlich, daß von dem Lenkergelenk aus gesehen der Abstand zu dem Fußgelenk des kürzeren Lenkers gleichgroß ist, wie der Abstand zur Arbeitsspindel, diese beiden Teile also ein gleichschenkliges Dreieck bilden. Besonders wenn nun das Lenkergelenk an dem ersten, größeren Lenker in der Mitte angeordnet ist, ergeben sich drei gleichlange Teile, nämlich der erste kürzere Lenker und die beiden Teile an dem längeren ersten Lenker. Es ergibt sich dann, daß sich die Rotationsachse der Arbeitsspindel immer über der Fußachse des Fußgelenkes des kürzeren, zweiten Lenkers befindet. Durch diese einfache geometrische Relation wird daher in einfacher Weise ein rechtwinkliger Arbeitsraum für die Arbeitsspindel beschrieben, da sich diese Verbindungslinie rechtwinklig zur Schienenbahn anschließt.

Da mit der Werkzeugmaschine spanabhebende Bearbeitungen an dem Werkstück durchzuführen sind, wird günstigerweise vorgeschlagen, daß die Werkzeugmaschine vom Bearbeitungsraum durch eine Verkleidung getrennt ist, wobei die Verkleidung von der Werkzeugspindel durchdrungen wird. Dadurch wird vermieden, daß die von dem im Bearbeitungsraum stehenden Werkstück abgelösten Spänen in den Bereich der Werkzeugmaschine kommen und dort die empfindlichen Gelenke, Antriebe und so weiter blockieren, verschmutzen oder sonst beeinträchtigen. Die Verkleidung besteht dabei aus einem beweglichen, aus mehreren Teilen bestehenden, plattenartigen Vorhang, wobei die Teile teleskopartig übereinander derart bewegbar sind, daß eine geschlossene Verkleidung resultiert.

Für die Befestigung der Verkleidung wird vorgesehen, daß diese zumindest an einem Fußgelenk und/oder an der Werkzeugpinole mit dem Bewegungssystem gekoppelt ist. Hierbei ist es günstig, daß die vorher beschriebenen Relation des kurzen Lenkers zu den beiden Teilen des langen Lenkers besteht, wodurch die Position der Rotationsachse der Werkzeugspindel im Bezug auf die Fußachse des Fußgelenkes im Raum bereits festliegt, beziehungsweise nur in einer Dimension noch unbestimmt ist und insbesondere hier zum Beispiel durch eine entsprechende Führung die Verkleidung schon an zwei Punkten geführt wird und so die Gefahr von Vibrationen, Flattern oder sonstigen Instabilitäten der Verkleidung im Betrieb, insbesondere bei großen Beschleunigungen deutlich reduziert wird. Günstigerweise wird die Verkleidung dabei auf zwei oder sogar drei Fixpunkte des Bewegungssystemes zumindest bezüglich eines noch verbleibenden Freiheitsgrades festgelegt. Dabei ist es günstig, daß bei einer Verwendung der beiden Fußgelenke diese Verbindungslinie rechtwinklig zur Verbindungslinie des Fußgelenkes des kürzeren Lenkers zur Rotationsachse der Werkzeugspindel liegt, da damit in einfacher Weise die Verkleidung an dem Bewegungssystem ankoppelbar und befestigbar ist. Dadurch wird auf einfache Weise ein zuverlässiger Schutz der Werkzeugmaschine vor im Bearbeitungsraum erzeugten Spänen gebildet, der einhergeht mit einer einfachen Ansteuerung der Position der Werkzeugspindel.

In einer bevorzugten Ausgestaltung der Erfindung ist vorgesehen, daß der erste, lange Lenker als parallelogrammartiger Doppellenker ausgebildet ist und jeder Teil des Doppellenkers eine Werkzeugspindel trägt. Hierbei ist zum Beispiel der Lenkerfuß entsprechend verlängert ausgebildet, um ein zweites Fußgelenk für den zweiten Teil des Doppellenkers aufzunehmen. Am oberen Ende des Lenkers wird das Parallelogramm durch einen weiteren Querlenker geschlossen, wobei die Werkzeugspindel günstigerweise im Bezug auf die jeweiligen Teile des Doppellenkers gleich positioniert werden, um die Ansteuerung zu erleichtern. Für entsprechende Bearbeitungsbilder kann es aber durchaus von Vorteil sein, von dieser Symmetrie abzuweichen. Gerade bei äquidistanten Bearbeitungen, die durch die Länge des Querlenkers bestimmt ist, erreicht eine solche Weiterentwicklung der Erfindung hier höhere Leistungen. Des weiteren besteht auch die Möglichkeit, an der ersten Werkzeugspindel das Werkzeug zu wechseln, während an der zweiten Werkzeugspindel eine Bearbeitung erfolgt. Hierzu wird die Werkzeugspindel, die zum Beispiel auf einer Werkzeugpinole angeordnet ist, ganz zurückgezogen, wobei dann ein entsprechender Wechselroboter die Werkzeuge tauscht. Durch den parallelen Ablauf von Funktionen, dem Bearbeiten einerseits und dem Wechsel des Werkzeuges andererseits, werden ebenfalls Bearbeitungszeiten beziehungsweise Rüstzeiten eingespart. Es resultiert eine höhere Effektivität einer solchen Werkzeugmaschine.

Zur besseren Ausnützung der Schienenbahn wird auch vorgeschlagen, daß auf einer gemeinsamen Schienenbahn zwei oder mehrere Bewegungssysteme angeordnet sind. Es ist dabei gleichwertig, ob die jeweiligen Bewegungssyteme unter sich identisch oder unterschiedlich ausgebildet sind. Dies kann den entsprechenden Einsatzzwecken vorbehalten bleiben. Es ist zum Beispiel auch möglich, daß parallel zur Bearbeitungsstraße die Schienenbahn mit den Bewegungssystemen vorgesehen ist und ein Bearbeitungsraum nicht konkret einer Werkzeugmaschine zugeordnet ist, sondern eine flexible Zuordnung erreicht wird. Dies kann bei Optimierung von Arbeitsabläufen eine deutliche Erleichterung und Effizienzsteigerung darstellen. Es wird auch vorgeschlagen, daß auf einer Schienenbahn zwei symmetrisch zueinander angeordnete Bewegungssysteme eingesetzt werden. Dabei kann zum Beipiel der Lenkerfuß, der zwischen den beiden Bewegungssytemen angeordnet ist, für beide, benachbarte Bewegungssysteme dienen. Eine solche Ausgestaltung kann zum Beispiel bei symmetrisch ausgebildeten Werkstücken von Vorteil sein, da durch einen gemeinsamen Antrieb eine gemeinsame Positionierung beider Werkzeugspindeln erreicht wird und so simultan mehrere Schritte durchgeführt werden, was ebenfalls zu einer erheblichen Zeitersparnis führen kann.

Durch den erfindungsgemäßen Vorschlag wird erreicht, daß eine, verglichen mit den bekannten kartesischen Werkzeugmaschinen, deutlich massenärmere Werkzeugmaschine realisiert wird. Diese geringere Masse erlaubt es, mit erfindungsgemäßen Werkzeugmaschinen höhere Bearbeitungsgeschwindigkeiten und auch Positioniergeschwindigkeiten zu fahren. Genauso ist es möglich, mit den gleichen Antrieben beziehungsweise Antriebskräften die geringeren Massen höher zu beschleunigen. Es stehen aber nicht nur Vorteile bei dem Betrieb einer solchen Werkzeugmaschine im Vordergrund, eine solche erfindungsgemäße Werkzeugmaschine ist auch einfach herstellbar, da einfache geometrische Körper, nämlich die Lenker, zu bilden sind, wobei es bei diesen auch noch möglich ist, im Bereich der Lenker oder auch der Gelenke moderne Materialien wie faserverstärkte Kunststoffe insbesondere glasfaser- oder kohlefaserverstärkte Kunststoffe einzusetzten. Dadurch wird eine zusätzliche Gewichtsersparnis erreicht. Die vorgenannten Materialien können natürlich nicht nur für die Gelenke sondern auch für die Lenker selber Verwendung finden.

In der Zeichnung ist die Erfindung schematisch dargestellt. Es zeigen:
- Fig. 1 und 2: jeweils Seitenansichten der erfindungsgemäßen Werkzeugmaschine und
- Fig. 3: in einer dreidimensionalen Ansicht die erfindungsgemäße Werkzeugmaschine.

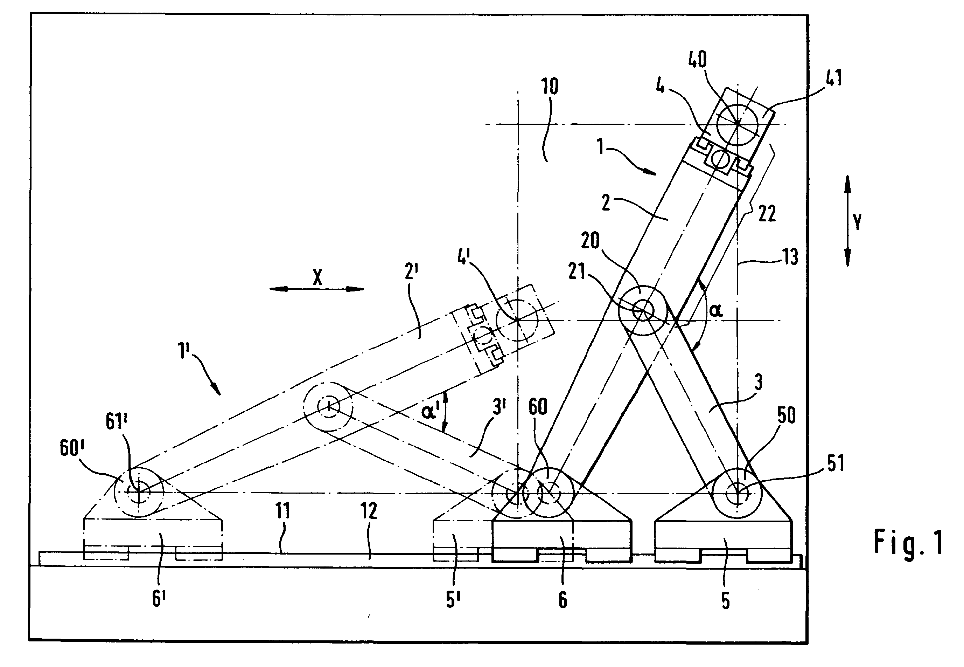

Das neuartige Konzept des Bewegungssystemes 1 der erfindungsgemäßen Werkzeugmaschine wird am besten in Fig. 1 deutlich. In Fig. 1 sind zwei Stellungen des Bewegungssystemes 1, 1' angedeutet, wobei die zweite Position gestrichelt dargestellt ist und die Bezugsziffern hierzu ebenfalls mit Strich sind.

Erfindungsgemäß wird vorgeschlagen, daß das Bewegungssystem 1 mindestens zwei miteinander durch ein Lenkergelenk 20 gelenkig verbundene Lenker 2, 3 umfaßt und die Enden der Lenker 2, 3 gegensinnig zueinander und/oder miteinander bewegbar sind. Das in Fig. 1 dargestellte Ausführungsbeispiel erinnert an den griechischen Buchstaben "lambda". Er ist dominiert von einem ersten, langen Lenker 2, der an seinem oberen Ende eine Werkzeugspindel 4 trägt. Mittig unterstützt wird der Lenker 2 von einem zweiten, kurzen Lenker 3, der im Bereich des Lenkergelenkes an dem ersten Lenker 2 durch das Lenkergelenk 20 angeschlossen ist.

Allgemein reicht es aus, wie beschrieben, daß die freien Enden des Lenkers 2, 3 auf einer Ebene 11 beweglich sind. Hierzu sind verschiedenste Konzepte möglich, es ist auch möglich, daß die freien Enden nicht auf einer gemeinsamen Ebene 11, wie dargestellt, verschiebbar sind, sondern verschiedene, auch versetzte Ebenen möglich sind. Hieraus resultieren die unterschiedlichsten Bewegungsmöglichkeiten der Arbeitsspindel 4.

Wie in der Zeichnung dargestellt ist eine Schienenbahn 12 vorgesehen, auf welcher schlittenartige Lenkerfüße 5, 6 beweglich sind. An den Lenkerfüßen 5, 6 sind über Fußgelenke 50, 60 die jeweiligen Lenker 3, 2 gelenkig verbunden. Dabei ist der kürzere, zweite Lenker 3 mit dem rechten Lenkerfuß 5 verbunden.

Die Anordnung der Lenker über die Lenkerfüße auf einer Schienenbahn erlaubt eine Beweglichkeit der Lenkerfüße in X-Richtung, was mit dem Doppelpfeil angedeutet ist. Werden nun beide Lenkerfüße 5, 6 auf der Schienenbahn 12 gleichsinnig, zum Beispiel nach links versetzt, so ergibt sich die maximale Bearbeitungsweite in X-Richtung des Arbeitsraumes 10, die über den eingezeichneten, gestrichelten Arbeitsraum 10 nach links hinaus sich erstreckt und zum Beispiel für Revisions- oder Werkzeugwechselintervalle angesteuert wird.

Der Arbeitsraum 10 beziehungsweise die dadurch definierte Arbeitsebene 10 wird als die Fläche beschrieben, über welche die Arbeitsspindel 4 bewegbar ist. Neben einer Ausweitung in X-Richtung wird hierzu auch ein Hub in Y-Richtung, siehe Doppelpfeil, benötigt.

Das Neue an der erfindungsgemäßen Werkzeugmaschine ist, daß nicht, wie bei den bekannten kartetischen Werkzeugmaschinen jeweils abhängige Bewegungskomponenten aufgebaut werden müssen, wodurch sehr voluminöse und schwere Maschinen entstehen, sondern daß das gleiche System, welches für die Bewegung in X-Richtung dient auch für eine Bewegung in Y-Richtung ausgenützt wird, wobei günstigerweise dann keine gleichsinnige Bewegung der Lenkerfüße beziehungsweise der freien Enden der Lenker 2, 3 vorgesehen wird, sondern eine gegensinnige Bewegung. Eine gegensinnige Bewegung der freien Enden der Lenker 2, 3 beziehungsweise der Lenkerfüße 5, 6 kann eine sich annähernde Bewegung der Lenker oder eine sich trennende Bewegung der Lenkerenden bedeuten. Eine solche Auseinanderbewegung ist in der linken, gestrichelten Ansicht in Fig. 1 zu sehen. Durch das Auseinanderfahren der beiden Lenkerfüße 5', 6' verringert sich der Winkel α zwischen den beiden Lenkern 2, 3 auf einen minimalen Grenzwinkel, die Arbeitsspindel fährt bei dieser Bewegung von der in der rechten, höheren vertikalen Position in die linke, niedrigere vertikale Position unter Durchführung eines Hubes in Y-Richtung. Es ist gezeigt, daß unter Ausnützung der Bewegungskomponente des Bewegungssystemes für die X-Komponente, durch unterschiedliche Ansteuerung, eine zur ersten Bewegungskomponente rechtwinklige Bewegungskomponente realisiert wird.

In Fig. 1, linke Position, ist gleichzeitig die Werkzeugmaschine auch relativ nach links versetzt, der maximale Arbeitsraum ist mit 10 gekennzeichnet. Es ist natürlich möglich, daß der rechte Lenkerfuß 5 stehen bleibt und nur der linke Lenkerfuß 6 nach links verfahren wird, um eine Absenkung der Arbeitsspindel 4 zu erreichen. Es kommt letztendlich auf die Relativbewegung, also den Abstand der beiden Lenkerfüße 5, 6 zueinander an. Es müssen nicht beide Lenker 2, 3 bewegt werden.

Es ist vorgesehen, daß der Winkelbereich α von 30° bis 160°, bevorzugt von 45° bis 130° umfaßt, wobei in den beiden hier dargestellten Grenzwinkeln ein Wert von α = 125° und *α' =* ca. 50° vorgesehen ist.

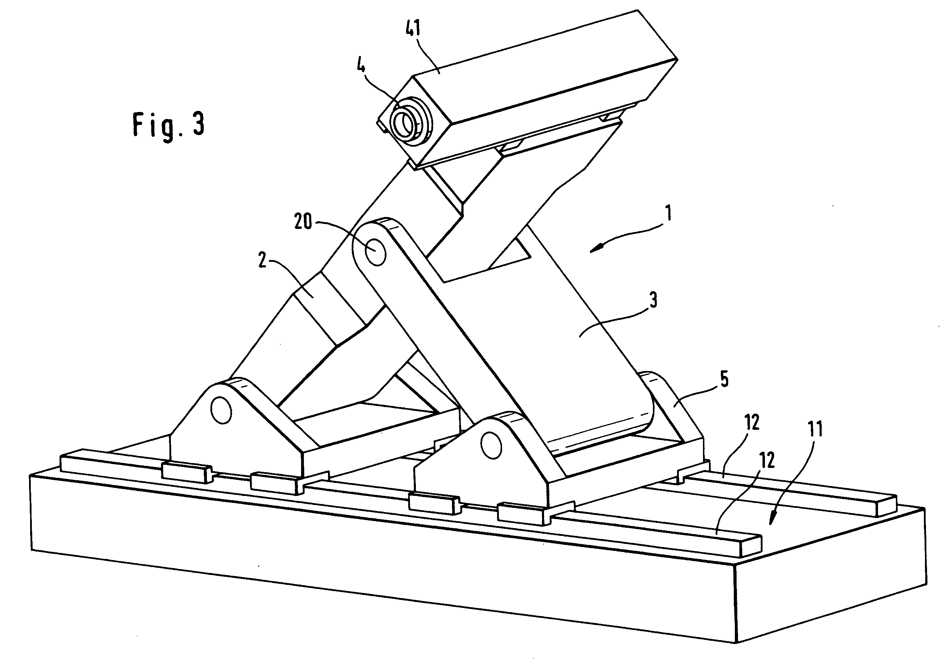

In dem in Fig. 1, 2 und 3 gezeigten Ausführungsbeispiel werden im Hinblick auf die wirksamen Längen der Lenker 2, 3 spezielle Verhältnisse eingehalten, wodurch sich zusätzlich günstige Eigenschaften einstellen. Es ist vorgesehen, daß die Länge des zweiten Lenkers 3 der Länge des Lenkerstückes 22 entspricht, wobei die Längen im Hinblick auf die jeweiligen Achsen zu beziehen ist. Hierbei ist die Fußgelenkachse mit 51 beziehungsweise 61 gekennzeichnet, um welches das jeweilige Fußgelenk 50, 60 dreht. Die Lenkergelenkachse 21 ist am Lenkergelenk 20 (in diesem Beispiel mittig auf dem ersten Lenker 2 angeordnet) vorgesehen. Die wirksame Länge ist hierbei der Abstand der relevanten Achsen, wobei die Länge des Lenkerstückes 22 definiert wird durch den Abstand der Rotationsachse 40 der Arbeitsspindel 4 zur Lenkergelenkachse 21. Durch diese Gegebenheit wird erreicht, daß durch das Lenkerstück 22 und den zweiten Lenker 3 ein gleichschenkliges Dreieck aufgespannt wird mit dem Effekt, daß sich die Rotationsaches 40 der Arbeitsspindel 4 exakt über der Fußgelenkachse 51 des Fußgelenkes 50 des kürzeren, zweiten Lenkers 3 befindet.

Wird bei diesen geometrischen Gegebenheiten, wie beschrieben, nun der linke Lenkerfuß 6 nach links versetzt, so fährt bei einer horizontalen Ausrichtung der Bewegungsrichtung des Lenkerfußes 6 (auf seiner Schienenbahn 12) die Arbeitsspindel im rechten Winkel und somit exakt vertikal von oben nach unten entlang der gekennzeichneten Linie 13. Dabei ist es von Vorteil, daß eine solche Bewegung ohne aufwendige Interpolationsrechnungen durchführbar ist. Aufgrund der einfachen geometrischen Gegebenheiten ist eine einfache Ansteuerung des Lenkerfußes 6 nur notwendig, um diese exakt geradlinige Bewegung zu erreichen. Ein weiterer Vorteil dieser Ausgestaltung liegt auch darin, daß sich die Kante 13 rechtwinklig zur Längserstreckung der Schienenbahn 12 ergibt und so ein rechtwinkliger Arbeitsraum beziehungsweise eine Arbeitsebene 10 entsteht.

Die sonst bei komplizierteren Maschinenkonzepten notwendigen Interpolationsrechnungen sind durch den erfindungsgemäßen Vorschlag vollständig vermeidbar, wodurch einfache geometrische Beziehungen ausreichen, um exakte Bearbeitungsergebnisse durch die Werkzeugaschine zu erreichen.

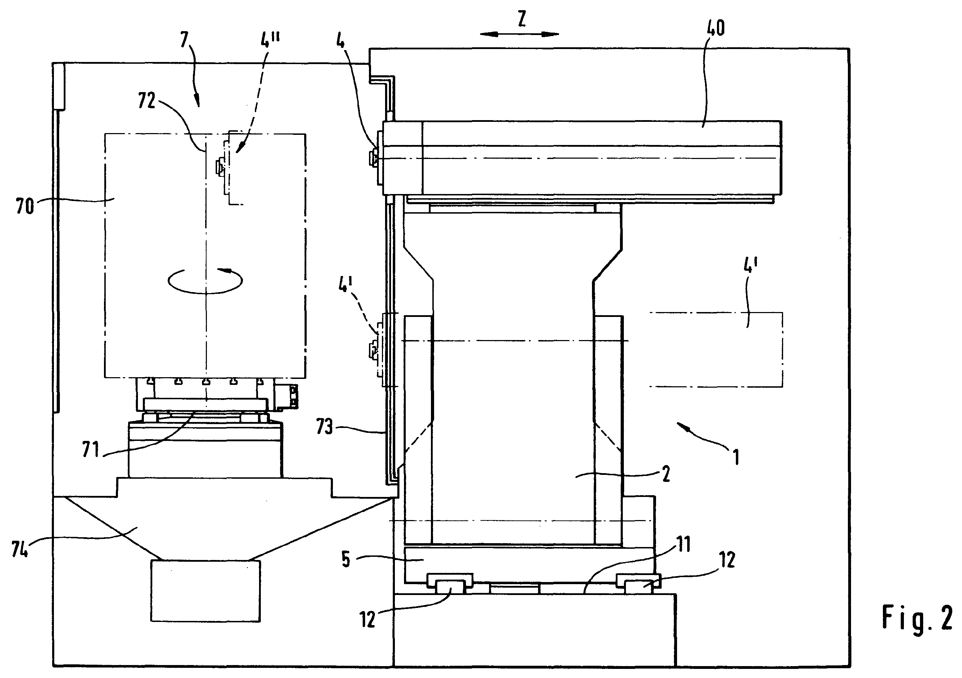

Es ist vorgesehen, daß an dem ersten, langen Lenker 2 die Arbeitsspindel 4 angeordnet ist. Günstigerweise ist die Arbeitsspindel 4 in einer Pinole 41 gelagert, wobei die Pinole 41 eine Beweglichkeit, wie hier dargestellt, rechtwinklig zur zweiten Ebene beziehungsweise Arbeitsebene 10 erlaubt. Diese Beweglichkeit ist insbesondere in Fig. 2 mit Z (Doppelpfeil) gekennzeichnet. Normalerweise wird durch diese Z-Komponente die Arbeitsspindel gegen das Werkstück 70 angestellt beziehungsweise der Bearbeitungsvorschub durchgeführt. Bei zerspanenden Tätigkeiten kann aber auch während der Bearbeitung also des Eingriffes des Werkzeuges in das Werkstück 70 eine Bewegung entlang der X oder Y-Achsen mit Hilfe nur eines Versatzes eines oder beider Lenkerfüße 5, 6 erfolgen.

Es wurde beschrieben, daß für komplexe Anwendungen, die Pinole 41 auch drehbar an dem Lenker 2 lagerbar ist, um durch eine vierte Achse zusätzliche Bearbeitungsschritte durchführen zu können. Natürlich ist es auch möglich, hier eine fünfte Achse vorzusehen.

Wesentlich bei der vorher beschriebenen geometrischen Eigenschaft der gleichen Längen ist insbesondere die Verbindung der Verkleidung 73 mit dem Bewegungssystem 1. Ähnliches ist natürlich auch bei anderen Geometrien der Lenker erreichbar.

Es ist vorgesehen, daß sich das Werkstück 70 in einem Bearbeitungsraum 7 befindet, wobei das Werkstück 70 auf einem Werkzeugträger 71 aufgespannt und gehalten ist, wobei der Werkzeugträger 71 zum Beispiel als Palette oder sonstiger Träger ausgebildet ist und am Bearbeitungsplatz zum Beispiel um eine vertikal stehende Drehachse 72 drehbar ist, um eine mehrseitige Bearbeitung des Werkstückes 70 durch die Arbeitsspindel 4 zuzulassen.

Regelmäßig werden an solchen Werkstücken 70 spanerzeugende Bearbeitungen wie Fräsen oder Bohren ausgeführt und es muß eine Verkleidung 73 zwischen dem Bearbeitungsraum 7 und dem Raum der Arbeitsspindel 4 beziehungsweise der Werkzeugmaschine vorgesehen werden, um durch die feinen Späne oder Abriebe die einwandfreie Funktionsweise der Werkzeugmaschine nicht zu beeinträchtigen. Insbesondere ist darauf zu achten, da das Bewegungssystem ja aus einer Schienenbahn 12 besteht, daß vermieden wird, daß solche Späne in die empfindlichen Antriebe gelangen und dort Schaden anrichten.

Es wird daher erfindungsgemäß in einer bevorzugten Ausgestaltung vorgesehen, eine Verkleidung 73 anzuordnen, die von der Werkzeugspindel 4 durchdrungen wird.

Für eine optimale Spanabförderung ist unterhalb des Werkstückes 70 ein Spansammler 74 vorgesehen, der trichter- oder rinnenartig ausgebildet ist und in einem hinlänglich bekannten Spanförderbett die Späne sammelt. Günstigerweise wird der trichterartige Spansammler so ausgebildet, daß sich sein äußerer Rand hinter dem Rand der Verkleidung 73 erstreckt und so trichter-oder rinnenartig alle Späne einzusammeln vermag, die an der Verkleidung herunterregnen.

Zwar ist es in der Zeichnung nicht dargestellt, aber die gewählten geometrischen Konditionen erlauben eine einfache und zuverlässige Führung der Verkleidung an dem Bewegungssystem, wobei günstigerweise an der Verkleidung Führungsschienen vorgesehen sind, um zum Beispiel den Durchgangspunkt der Arbeitsspindel durch die Verkleidung oder ein oder beide Fußgelenke 50, 60 mit der Verkleidung 73 zu verbinden.

In Fig. 2 ist die maximale Vorschubmöglichkeit in Z-Richtung mit der Arbeitsspindel mit 4'' gekennzeichnet.

Neben dem hier gezeigten Beispiel, bei welchem das Bewegungssystem beziehungsweise die ganze Werkzeugmaschine auf dem Boden stehend realisiert ist, ist natürlich jede mögliche Orientierung des Bewegungssystemes im Raum, also hängend von oben, stehend von unten (mit der Z-Achse in vertikaler Richtung) oder auch unter schiefen Winkeln oder Diagonalen problemlos möglich.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Werkzeugmaschine bestehend mindestens aus einer Werkzeugspindel, die durch ein Bewegungssystem zumindest in einer Arbeitsebene bewegbar und positionierbar ist, **dadurch gekennzeichnet, daß** das Bewegungssystem (1) mindestens zwei miteinander durch ein Lenkergelenk (20) gelenkig verbundene Lenker (2, 3) umfaßt und die Enden der Lenker (2, 3) relativ gegensinnig zueinander und/oder miteinander bewegbar sind.

2. Werkzeugmaschine nach Anspruch 1, **dadurch gekennzeichnet, daß** sich die Lenker (2, 3) auf der gleichen Ebene (11) abstützen.

3. Werkzeugmaschine nach einem oder beiden der vorhergehenden Ansprüche, **dadurch gekennzeichnet, daß** der Lenker (2, 3) auf einem Lenkerfuß (6, 5) durch ein Fußgelenk (60, 50) gelenkig gelagert ist.

4. Werkzeugmaschine nach einem oder mehreren der vorhergehenden Ansprüche **dadurch gekennzeichnet, daß** der Lenkerfuß (50, 60) auf einer Schienenbahn (12) gelagert ist.

5. Werkzeugmaschine nach einem oder mehreren der vorhergehenden Ansprüche **dadurch gekennzeichnet, daß** als Antrieb der Lenker (2, 3) eine Kugelrollspindel, ein Linearantrieb, ein Ketten- beziehungsweise Bandantrieb oder eine Ritzel-Zahnstangenanordnung vorgesehen ist.

6. Werkzeugmaschine nach einem oder mehreren der vorhergehenden Ansprüche **dadurch gekennzeichnet, daß** die Drehachsen (21, 61, 51) des Lenkergelenkes (20) und des Fußgelenkes (50, 60) parallel zueinander angeordnet sind.

7. Werkzeugmaschine nach einem oder mehreren der vorhergehenden Ansprüche **dadurch gekennzeichnet, daß** die Rotationsachse (40) der Werkzeugspindel (4) parallel, rechtwinklig oder unter einem beliebigen Winkel zur Gelenkachse (21) des Lenkergelenkes (20) orientiert beziehungsweise einstellbar ist.

8. Werkzeugmaschine nach einem oder mehreren der vorhergehenden Ansprüche **dadurch gekennzeichnet, daß** das gesamte Bewegungssystem (1) auf einem eigens bewegbaren Schlitten angeordnet ist.

9. Werkzeugmaschine nach einem oder mehreren der vorhergehenden Ansprüche **dadurch gekennzeichnet, daß** die Werkzeugspindel (4) als Werkzeugpinole (41) ausgebildet ist und die Werkzeugspindel (4) unter einem Winkel, insbesondere rechtwinklig zur Arbeitsebene (10) bewegbar ist.

10. Werkzeugmaschine nach einem oder mehreren der vorhergehenden Ansprüche **dadurch gekennzeichnet, daß** die Lenker (2, 3) die gleiche Länge aufweisen.

11. Werkzeugmaschine nach einem oder mehreren der vorhergehenden Ansprüche **dadurch gekennzeichnet, daß** das Lenkergelenk (20) in der Nähe der Werkzeugspindel (4) angeordnet ist.

12. Werkzeugmaschine nach einem oder mehreren der vorhergehenden Ansprüche **dadurch gekennzeichnet, daß** die Lenker (2, 3) unterschiedliche Längen aufweisen und der längere, erste Lenker (2) die Werkzeugspindel (4) trägt.

13. Werkzeugmaschine nach einem oder mehreren der vorhergehenden Ansprüche **dadurch gekennzeichnet, daß** sich das Lenkergelenk (20) auf dem ersten Lenker (2) zwischen der Antriebsspindel (4) und dem Lenkerfuß (6) befindet.

14. Werkzeugmaschine nach einem oder mehreren der vorhergehenden Ansprüche **dadurch gekennzeichnet, daß** sich das Lenkergelenk (20) in der Mitte des ersten Lenkers (2) befindet.

15. Werkzeugmaschine nach einem oder mehreren der vorhergehenden Ansprüche **dadurch gekennzeichnet, daß** die Länge des zweiten, kurzen Lenkers (3) der Länge des Lenkerstückes (22) des ersten Lenkers (2) vom Lenkergelenk (20) zur Werkzeugspindel (4) entspricht.

16. Werkzeugmaschine nach einem oder mehreren der vorhergehenden Ansprüche **dadurch gekennzeichnet, daß** die Werkzeugmaschine vom Bearbeitungsraum (7) durch eine Verkleidung (73) getrennt ist, welche von der Werkzeugspindel (4) durchdrungen wird.

17. Werkzeugmaschine nach einem oder mehreren der vorhergehenden Ansprüche **dadurch gekennzeichnet, daß** die Verkleidung (73) zumindest an einem Fußgelenk (50, 60) und/oder an der Werkzeugpinole (41) mit dem Bewegungssystem (1) gekoppelt ist.

18. Werkzeugmaschine nach einem oder mehreren der vorhergehenden Ansprüche **dadurch gekennzeichnet, daß** der erste, lange Lenker als parallelogrammartiger Doppellenker ausgebildet ist und jeder Teil des Doppellenkers eine Werkzeugspindel trägt.

19. Werkzeugmaschine nach einem oder mehreren der vorhergehenden Ansprüche **dadurch gekennzeichnet, daß** auf einer gemeinsamen Schienenbahn zwei oder mehrere Bewegungssysteme vorgesehen sind.

20. Werkzeugmaschine nach einem öder mehreren der vorhergehenden Ansprüche **dadurch gekennzeichnet, daß** auf einer Schienenbahn zwei symmetrisch zueinander angeordnete Bewegungssysteme vorgesehen sind.

21. Werkzeugmaschine nach einem oder mehreren der vorhergehenden Ansprüche **dadurch gekennzeichnet, daß** der erste und der zweite Lenker (2, 3) einen Winkelbereich α von 30° bis 160°, bevorzugt von 45° bis 130° einschließen.
